# EUROPEAN PATENT APPLICATION

(11) **EP 3 043 323 A2**
(43) Date of publication of application: **13.07.2016**
(21) Application number: 16150742.1
(22) Date of filing: 11.01.2016
(51) Int. Cl.: G07C 5/08

(54) **AIRCRAFT ACTIVE HISTORY MEMORY MODULE**

(30) Priority: 12.01.2015 US 201514594369
(71) Applicant: Hamilton Sundstrand Corporation, Windsor Locks, CT 06096-1010 (US)
(72) Inventor: DeRoy, Robert M., Tolland, CT Connecticut 06084 (US)
(74) Representative: Iceton, Greg James

(57) **Abstract**

In one example, a system 10 includes a component 20 of an air management system 16 of an aircraft and an active history memory module 12 attached to the component 20. The active history memory module 12 includes interface circuitry 28 configured to receive data corresponding to one or more operational parameters of the aircraft. The active history memory module 12 further includes computer-readable memory 30 operably connected to the interface circuitry 28 and configured to store the data corresponding to the one or more operational parameters.

## Description

### BACKGROUND

The present disclosure is related to data storage devices employed by aircraft systems, and in particular to active history memory modules attached to components of an air management system of an aircraft and configured to store data corresponding to operational parameters of the aircraft.

Aircraft systems, such as avionics systems, hydraulic systems, power plant systems, fire protection systems, air management systems, or other such systems, typically include various components that are configured to implement specific functional operations performed by the system. For instance, an air management system (e.g., an environmental control system) can include an air cycle machine and/or air conditioning pack that provides conditioned (e.g., cooled) air (or liquid) to, for example, an aircraft cabin or galley. Operational control of the system components (e.g., motors, valves, actuators, compressors, or other components) are typically managed by a controller device. In addition, the controller device typically monitors operation of the components to identify system malfunctions.

To facilitate efficient repair in the case of a malfunction, such systems often include modular components that can be physically removed from the aircraft system in the event that field repair of the component is not practical due to, e.g., time, equipment, or other constraints. For instance, an air conditioning pack of an aircraft air management system can include a vapor cycle unit having an evaporator, a compressor, and an electronic expansion valve (EEV) for regulating a flow of coolant within the vapor cycle unit and the corresponding cooling of air flowing through the pack. In the event of a malfunction associated with the vapor cycle unit (e.g., a failure of the EEV), the vapor cycle unit can be physically removed from the aircraft and transported to a repair facility, such as an original equipment manufacturer (OEM) repair facility. In this way, rather than require a potentially time-consuming and costly repair in the field, the vapor cycle unit can be replaced and the faulty unit transported for repair, thereby helping to decrease aircraft downtime (i.e., time during which the aircraft is inoperable for flight) and the associated costs (e.g., loss in revenue from a commercial flight).

Removal of the component from the aircraft, while helping to facilitate efficient repair, can also separate the component from contextual data (e.g., aircraft flight and/or environmental state data) associated with the malfunction. Such contextual data can be beneficial to technicians or other personnel to determine, for example, a root cause of the malfunction. Accordingly, diagnosis and repair of the malfunctioning component at the repair facility can be difficult to accomplish.

### SUMMARY

In one example, a system includes a component of an air management system of an aircraft and an active history memory module attached to the component. The active history memory module includes interface circuitry configured to receive data corresponding to one or more operational parameters of the aircraft. The active history memory module further includes computer-readable memory operably connected to the interface circuitry and configured to store the data corresponding to the one or more operational parameters.

In another example, a method includes receiving, by a controller configured to control operation of a component of an air management system of an aircraft, data corresponding to one or more operational parameters of the aircraft via an aircraft data bus. The method further includes transmitting, by the controller, the data corresponding to the one or more operational parameters to an active history memory module attached to the component of the air management system via interface circuitry of the active history memory module. The method further includes storing, by the interface circuitry, the data corresponding to the one or more operational parameters in computer-readable memory of the active history memory module attached to the component of the air management system.

### BRIEF DESCRIPTION OF THE DRAWINGS

FIG. 1 is a block diagram of a system including an active history memory module that can store data corresponding to one or more operational parameters of an aircraft.
FIG. 2 is a block diagram of the active history memory module including interface circuitry and computer-readable memory.
FIG. 3 is a flow diagram illustrating example operations that can be used to store data corresponding to aircraft operational parameters in an active history memory module.
FIG. 4 is a flow diagram illustrating example operations that can be used to store data corresponding to aircraft operational parameters in an active history memory module.

### DETAILED DESCRIPTION

According to techniques of this disclosure, an active history memory module can be attached to a component of an aircraft system, such as a component of an aircraft air management system. The active history memory module can include interface circuitry and computer-readable memory configured to receive (e.g., from a controller device configured to control operation of the component) and store data corresponding to one or more aircraft operational parameters. Examples of such operational parameters can include, but are not limited to, aircraft flight and/or environmental state data, such as altitude, attitude, pitch, roll, airspeed, groundspeed, location, outside air temperature, or other data. In this way, the active history memory module can store contextual data descriptive of the aircraft operational and/or environmental state during an identified malfunction of the component (and, in certain examples, fault data corresponding to the identified malfunction).

The component (with the attached active history memory module) can be physically removed from the aircraft in response to, e.g., an identified error corresponding to the component. Following removal, the component and attached active history memory module can be transported for repair. Data stored in the active history memory module can be retrieved at, for example, the repair site, thereby helping to improve efficiency and accuracy of diagnostic and repair efforts. Accordingly, techniques of this disclosure can enable aircraft operational parameter data and/or malfunction data to effectively "follow" the component in the event that in-field repair is deemed impractical.

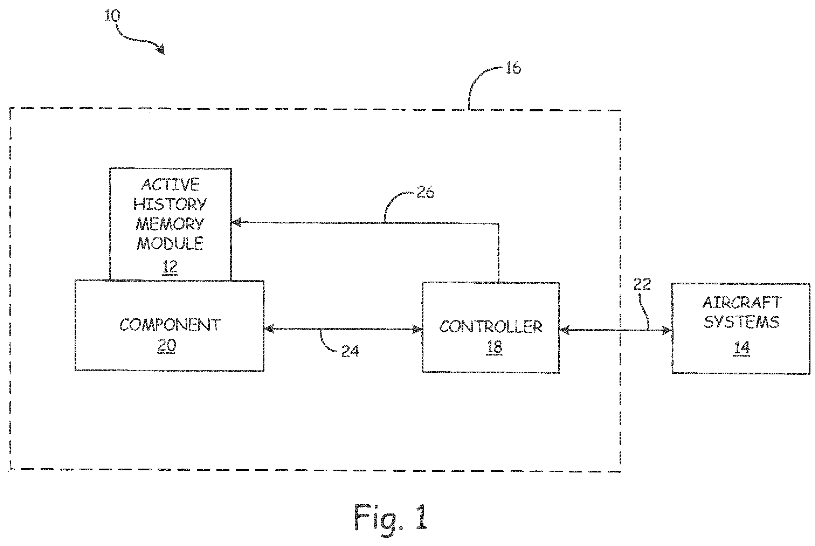

FIG. 1 is a block diagram of system 10 including active history memory module 12 that can store data corresponding to one or more operational parameters of an aircraft. As illustrated in FIG. 1, system 10 can include aircraft systems 14 and air management system 16. Air management system 16 can include active history memory module 12, controller 18, and component 20.

Aircraft systems 14 can include one or more systems configured to perform functional operations of an aircraft, such as flight control systems, navigation systems, electrical systems, instrumentation and recording systems, or other aircraft systems. Air management system 16 can be, for example, an aircraft air conditioning system, environmental control system, cabin pressurization system, or other such system that controls and/or conditions airflow within the aircraft.

Controller 18 can be any device configured to control and/or monitor operation of components within air management system 16, such as component 20. For example, controller 18 can be a hardware device having interface and/or control circuitry configured to interface with component 20 and implement one or more control algorithms configured to control operation of component 20. For instance, controller 18 can include one or more processors, application specific integrated circuits (ASICs), field programmable gate arrays (FPGAs), or other discrete or integrated logic circuitry.

Component 20 can be any component of air management system 16 that can be physically removed from air management system 16, such as for transport to a remote repair facility. For instance, component 20 can be an air conditioning pack or air cycle machine that provides conditioned (e.g., cooled) air to, for example, an aircraft cabin or galley. In some examples, component 20 can be a vapor cycle unit having an evaporator, a compressor, and an electronic expansion valve (EEV) for regulating a flow of coolant within the vapor cycle unit and the corresponding cooling of air and/or liquid flowing through the pack. As such, component 20 can include one or more sub-components, such as motors, actuators, sensors, valves, or other such sub-components usable by the component to execute functionality attributable to component 20.

Active history memory module 12 can be any device having interface circuitry and computer-readable memory configured to receive data corresponding to one or more operational parameters of the aircraft and store the operational parameter data in computer-readable memory, as is further described below. Active history memory module 12 is attached to component 20, such that active history memory module 12 remains attached to component 20 upon removal of component 20 from air management system 16. For instance, active history memory module 12 can include a housing that is fixedly attached to component 20, such as to one or more sub-components of component 20 (e.g., a compressor housing). Active history memory module 12 can be attached to component 20 via one or more fasteners, such as screws, bolts, rivets, or other fasteners. In other examples, active history memory module 12 can be integrally formed with component 20, such as with a housing of one or more sub-components of component 20.

Controller 18 is communicatively coupled to send and receive data with aircraft systems 14 via aircraft data bus 22. Aircraft data bus 22 can be a serial communication data bus, such as a two-wire twisted pair, an optical data bus, a wireless communication data bus, or other type of data bus capable of transmitting data representative of aircraft operational parameters. For instance, aircraft data bus 22 can be a two-wire data bus configured to send and receive data via the ARINC 429 communication protocol.

As further illustrated in FIG. 1, controller 18 is coupled (e.g., electrically coupled, communicatively coupled, or both) with each of active history memory module 12 and component 20. For example, controller 18 can be electrically coupled to transmit control signals to and receive feedback from one or more motors, actuators, sensors, valves, or other elements of component 20 via connection 24. Controller 18 is communicatively coupled with active history memory module 12 to transmit data, such as aircraft operational parameter data, fault data (e.g., error codes), or other data to active history memory module 12 via connection 26, as is further described below. For example, connection 26 can be a serial communication bus (e.g., RS-232, RS-485, or other serial communication bus), an Ethernet connection, an optical data bus, or other type of communicative connection.

In operation, controller 18 receives data corresponding to one or more operational parameters of the aircraft from aircraft systems 14 via aircraft data bus 22. Examples of such operational parameters can include, but are not limited to, aircraft flight and/or environmental state data, such as altitude, attitude, pitch, roll, airspeed, groundspeed, vertical speed, location, outside air temperature, static air temperature, or other data. Controller 18 transmits data corresponding to the aircraft operational parameters to active history memory module 12 via connection 26, which stores the received data in computer-readable memory, as is further described below.

Controller 18 monitors operation of component 20 via received feedback from component 20 via connection 24 and identifies any malfunctions associated with component 20. Examples of identified malfunctions can include motor failures, valve position failures, sensor failures, other failures corresponding to a deviation from normal (e.g., expected) operational states of component 20. As one example, controller 18 can compare a feedback position signal of a valve of component 20 with a commanded position of the valve, and can identify a valve position failure in response to determining that a difference between the commanded position and the feedback position exceeds a threshold parameter (e.g., a threshold angular position of the valve). As another example, controller 18 can compare a feedback rotational rate of a rotor included in a motor of component 20 with a commanded rotational rate, and can identify a motor failure in response to determining that a difference between the commanded rotational rate and the feedback rotational rate exceeds a threshold rotational rate.

In some examples, controller 18 can determine a criticality level of the identified malfunction. For instance, controller 18 can classify the identified malfunction according to hierarchical criticality criteria stored in computer-readable memory of controller 18. As an example, controller 18 can segregate identified malfunctions into one of a plurality of categories (e.g., two, three, four, or more categories), each of the categories corresponding to one of a plurality of hierarchical levels associated with an effect of the malfunction on operational performance of the component. The hierarchical criticality criteria can include, for example, a plurality of fault codes, each of the fault codes segregated into one of the hierarchical levels. Controller 18 can select one of the fault codes that uniquely identifies an identified fault, and can determine the criticality level of the identified malfunction as the hierarchical level associated with the selected fault code. In certain examples, controller 18 can determine whether the criticality level of an identified fault satisfies threshold criticality criteria. The threshold criticality criteria can be, for example, a minimum hierarchical level associated with the identified fault.

Controller 18 can, in some examples, transmit an indication of a storage inhibit event to active history memory module 12, the storage inhibit event configured to cause active history memory module 12 to inhibit storage of aircraft operational parameter data, as is further described below. In certain examples, controller 18 can transmit the indication of the storage inhibit event in response identifying a malfunction associated with component 20. In some examples, controller 18 can transmit the indication of the storage inhibit event in response to determining that a criticality level of an identified fault satisfies the threshold criticality criteria. The indication of the storage inhibit event can include a storage inhibit message as defined by, e.g., a communication protocol between controller 18 and active history memory module 12, an active high or low electrical signal on an electrical connection between controller 18 and active history memory module 12, or other such indication. In some examples, rather than transmit the indication of the storage inhibit event, controller 18 can transmit an indication of a fault event configured to cause active history memory module 12 to transfer aircraft operational parameter data from first computer-readable memory of active history memory module 12 to second active history memory module 12, as is further described below. In other examples, controller 18 can transmit both the indication of the storage inhibit event and the indication of the fault event.

Active history memory module 12 can store received aircraft operational parameter data and/or fault data corresponding to component 20 in computer-readable memory of active history memory module 12. Accordingly, upon removal of component 20, and hence attached active history memory module 12, component 20 and active history memory module 12 can be transported for repair. Data stored in active history memory module 12 can be retrieved, such as for use by automated test equipment and/or technicians at the repair facility. Such aircraft operational parameter data can be useful for understanding the root cause of the identified fault that precipitated the removal of component 20. As such, techniques of this disclosure can increase accuracy of fault diagnosis and efficiency of repair, thereby decreasing costs associated with repair and maintenance of air management system 16.

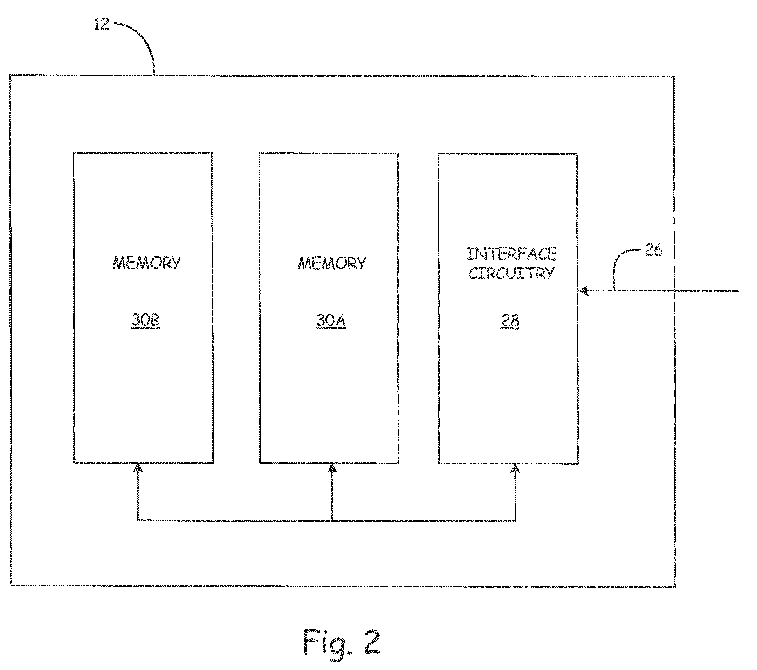

FIG. 2 is a block diagram of active history memory module 12 including interface circuitry 28 and computer-readable memory 30A and 30B (collectively referred to herein as "computer-readable memory 30"). As illustrated, interface circuitry 28 communicatively connects active history memory module 12 with controller 18 via connection 26. Examples of interface circuitry 28 can include any one or more of a microprocessor, a controller, a digital signal processor (DSP), an application specific integrated circuity (ASIC), a field-programmable gate array (FPGA), or other equivalent discrete or integrated logic circuitry.

One or more of computer-readable memory 30 can be configured to store information within active history memory module 12 during operation. Computer-readable memory 30, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, one or more of computer-readable memory 30 is a temporary memory, meaning that a primary purpose of the computer-readable memory is not long-term storage. One or more of computer-readable memory 30 is, in some examples, described as a volatile memory, meaning that the computer-readable memory does not maintain stored contents when power to active history memory module 12 is removed. Examples of volatile memories can include random access memories (RAM), dynamic random access memories (DRAM), static random access memories (SRAM), and other forms of volatile memories. In some examples, computer-readable memory 30 is used to store program instructions for execution by interface circuitry 28. Computer-readable memory 30, in one example, is used by software or applications running on active history memory module 12 to temporarily store information during program execution.

Computer-readable memory 30, in some examples, also include one or more computer-readable storage media. Computer-readable memory 30 can be configured to store larger amounts of information than volatile memory. Computer-readable memory 30 can further be configured for long-term storage of information. In some examples, Computer-readable memory 30 includes non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

In some examples, computer-readable memory 30 can be embodied in a single medium, such that computer-readable memory 30A represents a first portion of the computer-readable memory and computer-readable memory 30B represents a second portion of the computer-readable memory (e.g., first and second segregated partitions of the computer-readable memory). In some examples, computer-readable memory 30 can be embodied in multiple media, such that computer-readable memory 30A represents a first computer-readable medium and computer-readable memory 30B represents a second, different computer-readable medium. In certain examples, computer-readable memory 30A can be volatile memory (e.g., RAM), and computer-readable memory 30B can be non-volatile memory (e.g., flash). In other examples, rather than include multiple computer-readable media 30A and 30B, active history memory module 12 can include a single computer-readable memory.

As illustrated in FIG. 2, each of interface circuitry 28, computer-readable memory 30A, and computer-readable memory 30B can be interconnected (physically, communicatively, and/or operatively) for inter-component communications. Such interconnections can be accomplished via a system bus, a network connection, an inter-process communication data structure, or any other method for communicating data.

As illustrated, interface circuitry 28 is connected to receive aircraft operational parameter data and/or fault data corresponding to component 20 from controller 18 via connection 26. Interface circuitry 28 can be configured to store the received data in computer-readable memory 30. As one example, interface circuitry 28 can configure computer-readable memory 30 (e.g., computer-readable memory 30A) as a circular buffer configured to store a threshold amount of data (e.g., a threshold number of bytes of data). In such an example, interface circuitry 28 can store received data in the circular buffer and overwrite oldest data first when the circular buffer stores the threshold amount of data. As such, computer-readable memory 30 can be configured to store a "moving-window" of data corresponding to a most recent threshold amount data associated with a most recent threshold operational time period, such as a threshold number of seconds, minutes, or hours.

In operation, interface circuitry 28 can store received aircraft operational parameter and/or fault data (e.g., received from controller 18) in computer-readable memory 30, such as by configuring computer-readable memory 30 as a circular buffer. Interface circuitry 28 can, in some examples, inhibit storage of the received data (i.e., stop storing the received data in computer-readable memory 30) in response to receiving an indication of a storage inhibit event, such as in response to a malfunction of component 20 detected by controller 18. In this way, interface circuitry 28 can cause computer-readable memory 30 to store the aircraft operational parameter and/or fault data that precedes the occurrence of the identified malfunction by the threshold time period corresponding to the circular buffer size, and can prevent such data from being overwritten prior to removal of component 20 from the aircraft. In some examples, interface circuitry 28 can inhibit storage of the received data after a threshold amount of time (e.g., a threshold number of seconds, minutes, or hours) after receiving the indication of the storage inhibit event. In such examples, interface circuitry 28 can cause computer-readable memory 30 to store aircraft operational parameter and/or fault data that both precedes and follows the occurrence of the identified malfunction while preventing the data from being overwritten prior to removal of component 20 from the aircraft.

In some examples, rather than inhibit storage of received data in computer-readable memory 30, interface circuitry 28 can store received aircraft operational parameter and/or fault data in computer-readable memory 30A (e.g., volatile memory) and can transfer at least a portion of the data stored in computer-readable memory 30A to computer-readable memory 30B (e.g., non-volatile memory) in response to receiving an indication of a fault event. In such examples, interface circuitry 28 can continue to store received data in computer-readable memory 30A during aircraft operation without overwriting data corresponding to an identified fault.

Accordingly, techniques of this disclosure can enable active history memory module 12, attached to component 20 of air management system 16, to store data corresponding to operational parameters of the aircraft and/or fault information corresponding to component 20. Component 20, along with the attached active history memory module 12, can be removed from the aircraft, such as for transportation to a remote repair facility. Thereafter, data stored in computer-readable memory of active history memory module 12 corresponding to the aircraft operational parameter and/or fault data can be retrieved, such as for use in root cause analysis of an identified malfunction and the associated repair efforts. As such, techniques described herein can help to improve accuracy and efficiency of fault diagnosis and component repair.

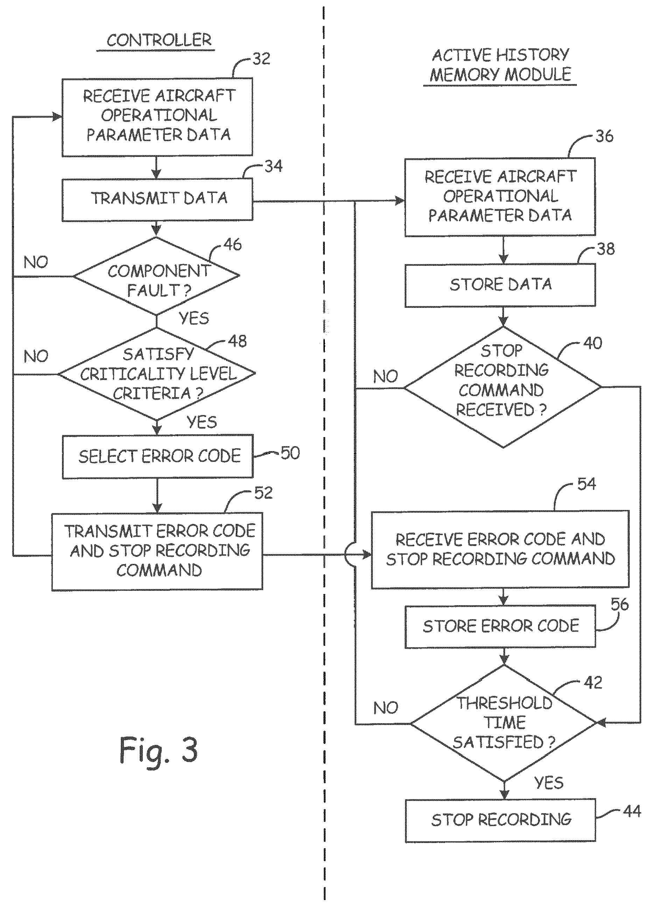

FIG. 3 is a flow diagram illustrating example operations that can be used to store data corresponding to aircraft operational parameters in an active history memory module. For purposes of illustration and discussion, the example operations are described below within the context of system 10 including active history memory module 12, as shown in FIGS. 1 and 2.

Controller 18 can receive data corresponding to one or more operational parameters of an aircraft (32). For instance, controller 18 can receive aircraft operational parameter data from aircraft systems 14 via aircraft data bus 22. Controller 18 can transmit the data corresponding to the one or more operational parameters to active history memory module 12 attached to component 20 of air management system 16 (34). For example, controller 18 can transmit received aircraft operational parameter data to active history memory module 12 via connection 26 to interface circuitry 28.

Active history memory module 12 can receive the transmitted aircraft operational parameter data (36), and can store the received data in computer-readable memory 30 (38). For instance, interface circuitry 28 can receive the aircraft operational parameter data via connection 26 to controller 18, and can store the received data in computer-readable memory 30 configured as a circular buffer. Interface circuitry 28 can determine whether active history memory module 12 has received an indication of a storage inhibit event (40). In examples where interface circuitry 28 determines that active history memory module 12 has not received an indication of a storage inhibit event ("NO" branch of 40), active history memory module 12 can continue to receive aircraft operational parameter data (36). In examples where interface circuitry 28 determines that active history memory module 12 has received an indication of a storage inhibit event ("YES" branch of 40), interface circuitry 28 can determine whether active history memory module 12 has continued to store the received aircraft operational parameter data for a threshold amount of time after receiving the indication of the storage inhibit event (42). In examples where interface circuity 28 determines that active history memory module 12 has continued to store the received data for the threshold amount of time after receiving the indication of the storage inhibit event ("YES" branch of 42), interface circuitry 28 can inhibit storage of the received data in computer-readable memory 30 (44). In examples where interface circuitry 28 determines that active history memory module 12 has not continued to store the received data for the threshold amount of time after receiving the indication of the storage inhibit event ("NO" branch of 42), interface circuitry 28 can continue to receive aircraft operational parameter data (36).

Controller 18 can determine whether a fault has been identified corresponding to component 20 of air management system 16 (46). For instance, controller 18 can receive data corresponding to operation of component 20 via connection 24, and can identify a fault corresponding to component 20 using the received data. In examples where controller 18 determines that no fault is identified corresponding to component 20 ("NO" branch of 46), controller 18 can continue to receive aircraft operational parameter data (32). In examples where controller 18 identifies a fault corresponding to component 20 ("YES" branch of 46), controller 18 can determine whether a criticality level of the identified fault satisfies threshold criticality criteria (48). For example, controller 18 can select one of a plurality of fault codes that uniquely identifies the fault, and can compare the identified fault code to a hierarchical arrangement of fault codes that segregates the fault codes into one of a plurality of criticality levels. Controller 18 can determine that the criticality level of the identified fault satisfies the threshold criticality criteria if the hierarchical level of the identified fault code satisfies the threshold hierarchical level.

In examples where controller 18 determines that the criticality level of the identified fault does not satisfy the threshold criticality criteria ("NO" branch of 48), controller 18 can continue to receive aircraft operational parameter data (32). In examples where controller 18 determines that the criticality level of the identified fault satisfies the threshold criticality criteria ("YES" branch of 48), controller 18 can select the fault code that uniquely identifies the fault (50) and can transmit the fault code and an indication of a storage inhibit event to active history memory module 12 (52). Controller 18 can continue to receive aircraft operational parameter data (32).

Active history memory module 12 can receive (via interface circuitry 28) the indication of the selected fault code and the indication of the storage inhibit event (54). In response to receiving the indication of the selected fault code and the indication of the storage inhibit event, interface circuitry 28 can store the selected fault code in computer-readable memory 30 (56). Thereafter, interface circuity 28 can determine whether active history memory module 12 has continued to store the received aircraft operational parameter data for a threshold amount of time after receiving the indication of the storage inhibit event (42).

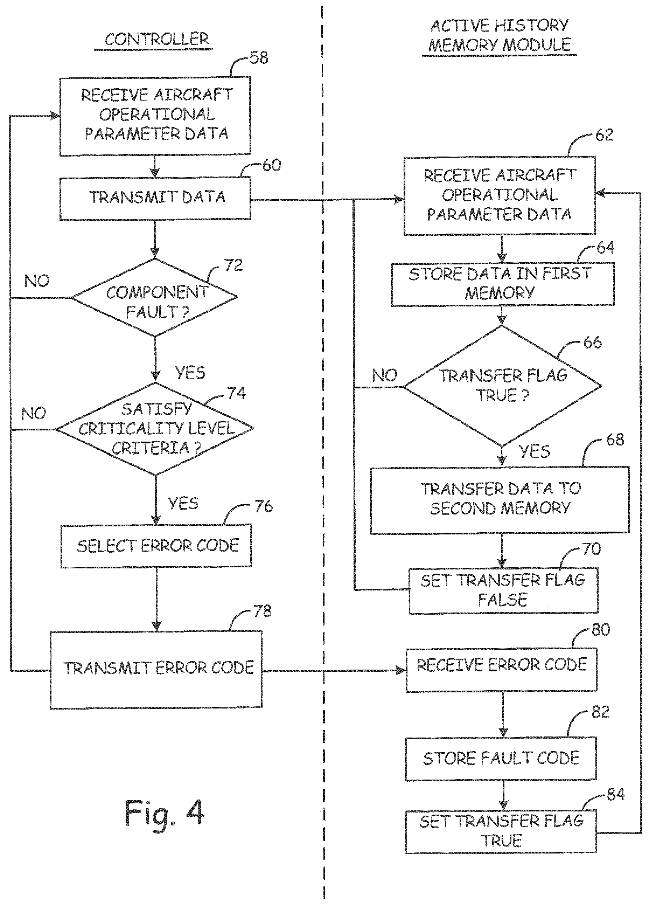

FIG. 4 is a flow diagram illustrating example operations that can be used to store data corresponding to aircraft operational parameters in an active history memory module. For purposes of illustration and discussion, the example operations are described below within the context of system 10 including active history memory module 12, as shown in FIGS. 1 and 2.

Controller 18 can receive data corresponding to one or more operational parameters of an aircraft (58). For instance, controller 18 can receive aircraft operational parameter data from aircraft systems 14 via aircraft data bus 22. Controller 18 can transmit the data corresponding to the one or more operational parameters to active history memory module 12 attached to component 20 of air management system 16 (60). For example, controller 18 can transmit received aircraft operational parameter data to active history memory module 12 via connection 26 to interface circuitry 28.

Active history memory module 12 can receive the transmitted aircraft operational parameter data (62). Interface circuitry 28 can store the received aircraft operational parameter data in first computer-readable memory of active history memory module 12 (64). For instance, interface circuitry 28 can store the received data in computer-readable memory 30A that can, in certain examples, be volatile memory configured, e.g., as a circular buffer.

Interface circuitry 28 can determine whether a data transfer flag indicates that interface circuitry 28 is to transfer data from the first computer-readable memory to second computer-readable memory (66). For instance, interface circuitry 28 can determine that the data transfer flag indicates that interface circuitry 28 is to transfer data from the first computer-readable memory to the second computer-readable memory if a value of the data transfer flag corresponds to a Boolean value of "true".

In examples where interface circuitry 28 determines that the data transfer flag indicates that interface circuitry 28 is not to transfer data from the first computer-readable memory to the second computer-readable memory ("NO" branch of 66), active history memory module 12 can continue to receive aircraft operational parameter data from controller 18. In examples where interface circuitry 28 determines that the data transfer flag indicates that interface circuitry 28 is to transfer data from the first computer-readable memory to the second computer-readable memory ("YES" branch of 66), active history memory module 12 can transfer at least a portion of the operational parameter data stored in the first computer-readable memory to the second computer-readable memory (68). For example, interface circuitry 28 can transfer at least a portion of the operational parameter data stored in computer-readable memory 30A (e.g., volatile memory) to computer-readable memory 30B (e.g., non-volatile memory).

Interface circuitry 28 can cause the data transfer flag to indicate that interface circuitry 28 is not to transfer data from the first computer-readable memory to the second computer-readable memory subsequent to the data transfer (70). Active history memory module 12 can continue to receive aircraft operational parameter data from controller 18 (62).

Controller 18 can determine whether a fault has been identified corresponding to component 20 of air management system 16 (72). For instance, controller 18 can receive data corresponding to operation of component 20 via connection 24, and can identify a fault corresponding to component 20 using the received data. In examples where controller 18 determines that no fault is identified corresponding to component 20 ("NO" branch of 72), controller 18 can continue to receive aircraft operational parameter data (58). In examples where controller 18 identifies a fault corresponding to component 20 ("YES" branch of 72), controller 18 can determine whether a criticality level of the identified fault satisfies threshold criticality criteria (74). For example, controller 18 can select one of a plurality of fault codes that uniquely identifies the fault, and can compare the identified fault code to a hierarchical arrangement of fault codes that segregates the fault codes into one of a plurality of criticality levels. Controller 18 can determine that the criticality level of the identified fault satisfies the threshold criticality criteria if the hierarchical level of the identified fault code satisfies a threshold hierarchical level.

In examples where controller 18 determines that the criticality level of the identified fault does not satisfy the threshold criticality criteria ("NO" branch of 74), controller 18 can continue to receive aircraft operational parameter data (58). In examples where controller 18 determines that the criticality level of the identified fault satisfies the threshold criticality criteria ("YES" branch of 74), controller 18 can select the fault code that uniquely identifies the fault (76) and can transmit the fault code to active history memory module 12 (78). In some examples, the fault code can be considered an indication of a fault event. In other examples, controller 18 can transmit an indication of a fault event in addition to the fault code. Controller 18 can continue to receive aircraft operational parameter data (58).

Active history memory module 12 can receive (via interface circuitry 28) the indication of the selected fault code (80). In response to receiving the indication of the selected fault code, interface circuitry 28 can store the selected fault code in computer-readable memory 30 (82), and can cause the data transfer flag to indicate that interface circuitry 28 is to transfer data from the first computer-readable memory to the second computer-readable memory (84). Interface circuitry 28 can continue to receive aircraft operational parameter data from controller 18(62).

According to techniques described herein, an active history memory module can be attached to a component of an aircraft system, such as a vapor cycle unit of an air conditioning pack included in an air management system. The active history memory module can store aircraft operational parameter data and/or fault data corresponding to the component. Data stored in the active history memory module can be retrieved at, for example, a repair site following removal of the component and active history memory module from the aircraft, thereby helping to improve efficiency and accuracy of diagnostic and repair efforts of the component.

### Discussion of Possible Embodiments

The following are non-exclusive descriptions of possible embodiments of the present invention.

A system includes a component (e.g., a Line Replaceable Unit) of an air management system of an aircraft and an active history memory module attached to the component. The active history memory module includes interface circuitry configured to receive data corresponding to one or more operational parameters of the aircraft. The active history memory module further includes computer-readable memory operably connected to the interface circuitry and configured to store the data corresponding to the one or more operational parameters.

The system of the preceding paragraph can optionally include, additionally and/or alternatively, any one or more of the following features, configurations and/or additional components:
The system can further include a controller configured to control operation of the component of the air management system and communicatively coupled to the active history memory module via the interface circuitry. The controller can be configured to receive the data corresponding to the one or more operational parameters of the aircraft via an aircraft data bus or via wireless communications. The interface circuitry can be configured to receive the data corresponding to the one or more operational parameters of the aircraft from the controller via the interface circuitry.

The interface circuitry can be configured to store the received data corresponding to the one or more operational parameters in the computer-readable memory for a first time period prior to receiving, from the controller, an indication of a storage inhibit event. The interface circuitry can be further configured to inhibit storage of the received data in the computer-readable memory after a threshold amount of time subsequent to receiving the indication of the storage inhibit event.

The controller can be configured to identify a fault corresponding to the component of the air management system, determine that a criticality level of the identified fault satisfies threshold criticality criteria, and transmit the indication of the storage inhibit event in response to determining that the criticality level of the identified fault satisfies the threshold criticality criteria.

The controller can be configured to select one of a plurality of fault codes that uniquely identifies the identified fault and transmit the selected fault code to the active history memory module via the interface circuitry. The active history memory module can be configured to store the selected fault code in the computer-readable memory.

The computer-readable memory can include first computer-readable memory and second computer-readable memory. The interface circuitry can be configured to store the received data corresponding to the one or more operational parameters in the first computer-readable memory, and transfer at least a portion of the received data stored in the first computer-readable memory to the second computer-readable memory in response to receiving an indication of a fault event from the controller.

The first computer-readable memory can include volatile computer-readable memory. The second computer-readable memory can include non-volatile computer-readable memory.

The computer-readable memory can include a circular buffer configured to store a threshold amount of data. The interface circuitry can be configured to store the received data corresponding to the one or more operational parameters in the circular buffer and overwrite oldest data first when the circular buffer stores the threshold amount of data.

A method includes receiving, by a controller configured to control operation of a component of an air management system of an aircraft, data corresponding to one or more operational parameters of the aircraft via an aircraft data bus. The method further includes transmitting, by the controller, the data corresponding to the one or more operational parameters to an active history memory module attached to the component of the air management system via interface circuitry of the active history memory module. The method further includes storing, by the interface circuitry, the data corresponding to the one or more operational parameters in computer-readable memory of the active history memory module attached to the component of the air management system.

The method of the preceding paragraph can optionally include, additionally and/or alternatively, any one or more of the following features, configurations, operations and/or additional components:
The method can further include transmitting, by the controller to the active history memory module via the interface circuitry, an indication of a storage inhibit event, and receiving, by the active history memory module via the interface circuitry, the indication of the storage inhibit event. Storing the data corresponding to the one or more operational parameters in the computer-readable memory can include storing the data in the computer-readable memory for a first time period prior to receiving, by the active history memory module, the indication of the storage inhibit event, and inhibiting storage of the received data in the computer-readable memory after a threshold amount of time subsequent to receiving the indication of the storage inhibit event.

The method can further include identifying, by the controller, a fault corresponding to the component of the air management system, and determining, by the controller, that a criticality level of the identified fault satisfies threshold criticality criteria. Transmitting the indication of the storage inhibit event can include transmitting the indication of the storage inhibit event in response to determining that the criticality level of the identified fault satisfies the threshold criticality criteria.

The method can further include selecting, by the controller, one of a plurality of fault codes that uniquely identifies the identified fault, and transmitting, by the controller, the selected fault code to the active history memory module via the interface circuitry. The method can further include storing, by the active history memory module, the selected fault code in the computer-readable memory.

Storing the data corresponding to the one or more operational parameters in the computer-readable memory of the active history memory module can include storing the received data in first computer-readable memory of the active history memory module. The method can further include receiving, by the active history memory via the interface circuitry, an indication of a fault event from the controller, the fault event corresponding to a malfunction of at least one sub-component of the component of the air management system. The method can further include transferring at least a portion of the received data stored in the first computer-readable memory to second computer-readable memory in response to receiving the indication of the fault event.

Storing the received data in the first computer-readable memory can include storing the received data in volatile computer-readable memory. Transferring at least the portion of the received data to the second computer-readable memory can include transferring at least the portion of the received data to non-volatile computer-readable memory.

Storing the data corresponding to the one or more operational parameters in the computer-readable memory of the active history memory module can include storing the data in a circular buffer of the computer-readable memory configured to store a threshold amount of data, and overwriting oldest data of the circular buffer first when the circular buffer stores the threshold amount of data.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system (10) comprising:
a component (20) of an air management system (16) of an aircraft; and
an active history memory module (12) attached to the component (20), the active history memory module (12) comprising:
interface circuitry (28) configured to receive data corresponding to one or more operational parameters of the aircraft; and
computer-readable memory (30) operably connected to the interface circuitry (28) and configured to store the data corresponding to the one or more operational parameters.

2. The system (10) of claim 1, further comprising:
a controller (18) configured to control operation of the component (20) of the air management system (16) and communicatively coupled to the active history memory module (12) via the interface circuitry (28);
wherein the controller (18) is configured to receive the data corresponding to the one or more operational parameters of the aircraft via an aircraft data bus; and
wherein the interface circuitry (28) is configured to receive the data corresponding to the one or more operational parameters of the aircraft from the controller (18) via the interface circuitry (28).

3. The system (10) of claim 2, wherein the interface circuitry (28) is configured to:
store the received data corresponding to the one or more operational parameters in the computer-readable memory (30) for a first time period prior to receiving, from the controller (18), an indication of a storage inhibit event; and
inhibit storage of the received data in the computer-readable memory (30) after a threshold amount of time subsequent to receiving the indication of the storage inhibit event.

4. The system (10) of claim 3,
wherein the controller(18) is configured to:
identify a fault corresponding to the component (20) of the air management system (16);
determine that a criticality level of the identified fault satisfies threshold criticality criteria; and
transmit the indication of the storage inhibit event in response to determining that the criticality level of the identified fault satisfies the threshold criticality criteria.

5. The system (10) of claim 4,
wherein the controller (18) is configured to select one of a plurality of fault codes that uniquely identifies the identified fault and transmit the selected fault code to the active history memory module via the interface circuitry; and
wherein the active history memory module (12) is configured to store the selected fault code in the computer-readable memory (30).

6. The system (10) of claim 2,
wherein the computer-readable memory (30) comprises first computer-readable memory (30A) and second computer-readable memory (30B); and
wherein the interface circuitry (28) is configured to:
store the received data corresponding to the one or more operational parameters in the first computer-readable memory (30A); and
transfer at least a portion of the received data stored in the first computer-readable memory (30A) to the second computer-readable memory (30B) in response to receiving an indication of a fault event from the controller.

7. The system (10) of claim 6,
wherein the first computer-readable memory (30A) comprises volatile computer-readable memory; and
wherein the second computer-readable memory (30B) comprises non-volatile computer-readable memory.

8. The system (10) of claim 1,
wherein the computer-readable memory (30) comprises a circular buffer configured to store a threshold amount of data; and
wherein the interface circuitry (28) is configured to store the received data corresponding to the one or more operational parameters in the circular buffer and overwrite oldest data first when the circular buffer stores the threshold amount of data.

9. A method comprising:
receiving, by a controller (18) configured to control operation of a component (20) of an air management system (16) of an aircraft, data corresponding to one or more operational parameters of the aircraft via an aircraft data bus;
transmitting, by the controller (18), the data corresponding to the one or more operational parameters to an active history memory module (12) attached to the component of the air management system (16) via interface circuitry (28) of the active history memory module (12); and
storing, by the interface circuitry (28), the data corresponding to the one or more operational parameters in computer-readable memory (30) of the active history memory module (12) attached to the component (20) of the air management system (16).

10. The method of claim 9, further comprising:
transmitting, by the controller (18) to the active history memory module (12) via the interface circuitry (28), an indication of a storage inhibit event; and receiving, by the active history memory module (12) via the interface circuitry (28), the indication of the storage inhibit event;
wherein storing the data corresponding to the one or more operational parameters in the computer-readable memory (30) comprises:
storing the data in the computer-readable memory (30) for a first time period prior to receiving, by the active history memory module (12), the indication of the storage inhibit event; and
inhibiting storage of the received data in the computer-readable memory (30) after a threshold amount of time subsequent to receiving the indication of the storage inhibit event.

11. The method of claim 10, further comprising:
identifying, by the controller (18), a fault corresponding to the component of the air management system; and
determining, by the controller (18), that a criticality level of the identified fault satisfies threshold criticality criteria;
wherein transmitting the indication of the storage inhibit event comprises transmitting the indication of the storage inhibit event in response to determining that the criticality level of the identified fault satisfies the threshold criticality criteria.

12. The method of claim 11, further comprising:
selecting, by the controller (18), one of a plurality of fault codes that uniquely identifies the identified fault;
transmitting, by the controller (18), the selected fault code to the active history memory module via the interface circuitry; and
storing, by the active history memory module (12), the selected fault code in the computer-readable memory.

13. The method of claim 9, wherein storing the data corresponding to the one or more operational parameters in the computer-readable memory (30) of the active history memory module (12) comprises storing the received data in first computer-readable memory of the active history memory module (12), the method further comprising:
receiving, by the active history memory module (12) via the interface circuitry (28), an indication of a fault event from the controller, the fault event corresponding to a malfunction of at least one sub-component of the component of the air management system (16); and
transferring at least a portion of the received data stored in the first computer-readable memory (30A) to second computer-readable memory (30B) in response to receiving the indication of the fault event.

14. The method of claim 13,
wherein storing the received data in the first computer-readable memory comprises storing the received data in volatile computer-readable memory; and
wherein transferring at least the portion of the received data to the second computer-readable memory comprises transferring at least the portion of the received data to non-volatile computer-readable memory.

15. The method of claim 9, wherein storing the data corresponding to the one or more operational parameters in the computer-readable memory (30) of the active history memory module (12) comprises:
storing the data in a circular buffer of the computer-readable memory (30) configured to store a threshold amount of data; and
overwriting oldest data of the circular buffer first when the circular buffer stores the threshold amount of data.
